Europäisches Patentamt

European Patent Office

Office européen des brevets

(11) Veröffentlichungsnummer: **0 354 393**
**A2**

(12) **EUROPÄISCHE PATENTANMELDUNG**

(21) Anmeldenummer: 89113257.3

(22) Anmeldetag: 19.07.89

(51) Int. Cl.⁴: **B23B 5/16 , B23B 49/04**

(30) Priorität: 09.08.88 DE 3826985

(43) Veröffentlichungstag der Anmeldung:
14.02.90 Patentblatt 90/07

(84) Benannte Vertragsstaaten:
AT CH ES GB IT LI

(71) Anmelder: EMAG MASCHINENFABRIK GMBH
Austrasse 24
D-7335 Salach/Württemberg(DE)

(72) Erfinder: Bader, Manfred
Erbprinzenstr. 32
D-7532 Niefern/ Oeschelbronn(DE)

(74) Vertreter: Zmyj, Erwin, Dipl.-Ing.
Rosenheimer Strasse 52
D-8000 München 80(DE)

(54) **Endenbearbeitungsmaschine.**

(57) Die Endenbearbeitungsmaschine weist auf einem Maschinenbett (1) zwei Spannstockträger (3) auf, die längs einer Führung (2) des Maschinenbettes verfahrbar sind. Die Spannstockträger (3) sind mit drehbar gelagerten Spannfuttern (5) ausgerüstet, wobei zumindest eines dieser Spannfutter (5) in Drehrichtung antreibbar ist. An den Enden des Maschinenbettes (1) sind Spindelstöcke (7) vorgesehen, die jeweils auf einer quer zur Maschinenbettlängsachse angeordneten Bettführung (8) verschiebbar sind. Aufgrund dieser Verschiebbarkeit der Spindelstöcke (7) und der Drehbarkeit und Antreibbarkeit der Spannfutter (5) können nicht nur zentrische in bezug auf die Werkstücklängsachse vorgesehene Bearbeitungen, sondern auch außermittige Bearbeitungen vorgenommen werden.

**Fig. 1**

### Endenbearbeitungsmaschine

Die Erfindung bezieht sich auf eine Endenbearbeitungsmaschine mit zwei Spindelstöcken mit jeweils einer Werkzeugaufnahme und zwei verfahrbaren Spannstockträgern mit jeweils einer Spanneinrichtung.

Endenbearbeitungsmaschinen dieser Art sind hinlänglich bekannt und dienen zum Ablängen eines Werkstückes sowie für verschiedene Bearbeitungsvorgänge an den Enden eines Werkstückes wie z. B. Einbringen von Bohrungen in Längsachse des Werkstückes und Einbringen von Gewinden in diesen Bohrungen. Solche Arbeiten sind bei einfachen Maschinen nur im Zentrum des Werkstückes möglich. Wenn außermittig bearbeitet werden soll, muß entweder der Spindelkasten oder der Spannstockträger quer zur Längsachse des Maschinenbettes, auf dem der Spannstockträger verfahrbar ist, verschiebbar sein. Selbst wenn eine solche Verschiebbarkeit vorgesehen sein sollte, so kommt man nicht ohne Umspannen des Werkstückes aus, wenn an mehreren Stellen, die nicht auf einer durch das Zentrum des Werkstückes gehenden Achse liegen, bearbeitet werden soll. Darüber hinaus ist ein Zirkularfräsen, z. B. das Einbringen einer zentrisch in bezug auf die Werkstückachse umlaufenden Nut auf solchen Endenbearbeitungsmaschinen nicht möglich.

Aufgabe der Erfindung ist es, eine Endenbearbeitungsmaschine der eingangs erläuterten Art so auszugestalten, daß eine vielseitige Bearbeitung der Werkstückenden bei geringem konstruktivem Aufwand möglich ist.

Diese Aufgabe wird bei einer Endenbearbeitungsmaschine der im Oberbegriff des Anspruchs 1 angegebenen Art erfindungsgemäß dadurch gelöst, daß die Spanneinrichtung eines jeden Spannstockträgers als ein um die Werkstückachse drehbares Spannfutter ausgebildet und zumindest ein Spannfutter in Drehrichtung durch einen Antrieb verdrehbar und positionierbar ist.

Aufgrund dieser Ausgestaltung sind die verschiedensten Bearbeitungsmöglichkeiten an den Enden eines Werkstückes gegeben. Außer der zentrischen Bearbeitung eines Werkstückes, die bisher ebenfalls möglich war, können nun außermittige Bohrungen an jeder beliebigen Stelle der Stirnseite des Werkstückes dadurch eingebracht werden, daß der Spindelstock quer zur Maschinenbettlängsachse verschiebbar und das Spannfutter verdrehbar ist, wobei das Verdrehen in die gewünschte Stellung durch einen entsprechenden Antrieb erfolgt. An diesen Stellen können dann außer Bohrungen auch Gewinde eingebracht und sonstige Arbeiten wie z. B. Reiben, Senken usw. durchgeführt werden. Ein wesentlicher Vorteil, der sich aus der erfindungsgemäßen Ausgestaltung ergibt, besteht auch darin, daß an den Stirnenden der Werkstücke ein Zirkularfräsen durch Verschieben des Spindelstockträgers mit seinem Werkzeug sowie durch einen Drehantrieb des Spannfutters möglich ist.

Alle solche Arbeiten, die hier nicht abschließend aufgezählt sind, können aufgrund der erfindungsgemäßen Ausgestaltung durchgeführt werden, wobei der wesentliche Vorteil der Erfindung darin besteht, daß der konstruktive Aufwand sehr gering ist und nur darin besteht, daß an Stelle der bisher einfachen Spanneinrichtungen bei den Spannstockträgern nun Spannfutter verwendet werden, die drehbar gelagert sind, wobei zumindest eines dieser Spannfutter in Drehrichtung antreibbar ist. Hierdurch wird eine in vertikaler Richtung notwendige Verschiebemöglichkeit des Spindelstockes vermieden, die einen wesentlich höheren konstruktiven Aufwand erfordern würde.

Bei torsionsstabilen Werkstücken reicht es aus, wenn nur ein Spannfutter antreibbar ist. Sollen dagegen besonders torsionsweiche Werkstücke bearbeitet werden, dann kann es unter Umständen notwendig sein, beide Spannfutter der zwei Spannstockträger anzutreiben, wobei der Antrieb dann synchron ablaufen muß. Dies ist insbesondere dann notwendig, wenn an beiden Enden umlaufende Nuten eingefräst werden sollen, wobei große Reaktionskräfte entstehen.

Um die eingangs erwähnten verschiedenen Arbeiten durchführen zu können, empfiehlt es sich, daß der Antrieb für das antreibbare Spannfutter stufenlos regelbar ist.

Da eine Positionierung des Werkstückes in den verschiedenen Winkellagen, beispielsweise zur Einbringung von außermittigen Bohrungen, notwendig ist, ist es vorteilhaft, wenn in weiterer Ausgestaltung der Erfindung der Antrieb für das antreibbare Spannfutter arretierbar ist. Hierdurch kann eine zusätzliche Indexiereinrichtung vermieden werden. Hierbei ist es vorteilhaft, wenn der Antrieb für das antreibbare Spannfutter als selbsthemmender Schneckenantrieb ausgebildet ist.

Die Erfindung wird nachstehend anhand eines in der Zeichnung dargestellten Ausführungsbeispieles näher erläutert. In der Zeichnung zeigen:

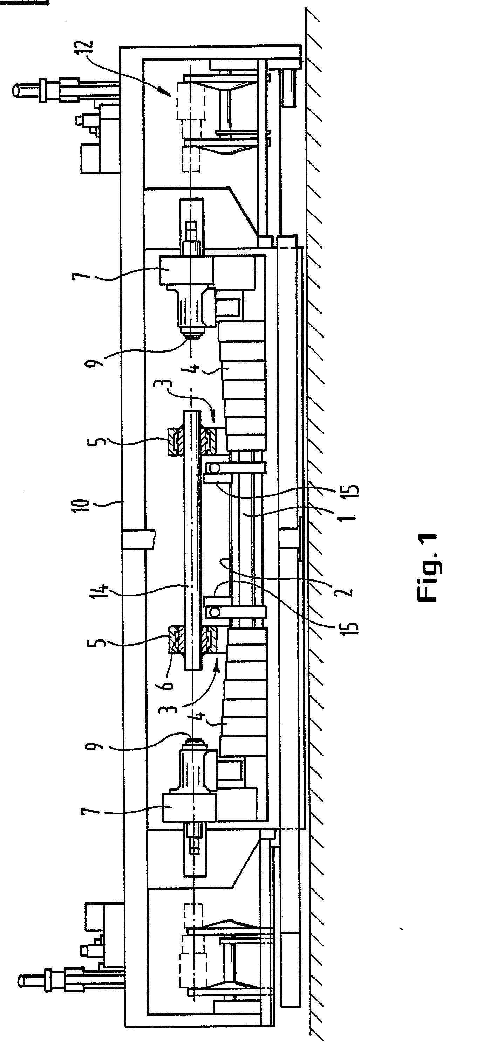

Fig. 1 eine Seitenansicht einer Endenbearbeitungsmaschine und

Fig. 2 eine Stirnansicht der Endenbearbeitungsmaschine nach Fig. 1.

Auf einem Maschinenbett 1 sind in Langsrichtung desselben Führungen 2 für zwei Spannstockträger 3 vorgesehen, die in Längsrichtung des Maschinenbettes auf den Führungen 2 mittels eines nicht dargestellten Antriebes verschiebbar sind, wobei sich der Antrieb unter den in der Zeichnung gezeigten teleskopartigen Abdeckungen 4 befindet. Die Spannstockträger 3 sind jeweils mit einem drehbaren Spannfutter 5 ausgerüstet, wobei zumindest ein Spannfutter mit einem schematisch angedeuteten Antrieb 6 versehen ist. Vorzugsweise ist der Spannstockträger als Mittenantriebs-Spindelkasten ausgeführt.

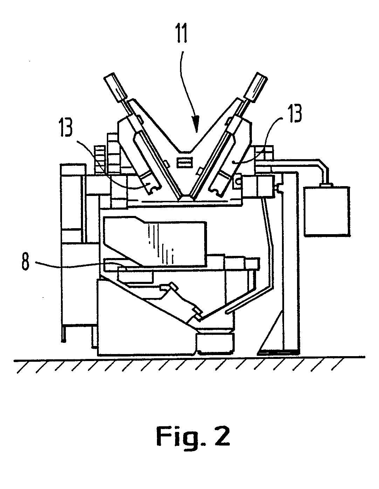

An den Enden des Maschinenbettes 1 sind Spindelstöcke 7 vorgesehen, die, wie aus Fig. 2 ersichtlich, auf jeweils einem quer zur Längsrichtung des Maschinenbettes 1 verlaufenden weiteren Maschinenbett 8 verfahrbar sind. Jeder Spindelstock weist eine angetriebene Spindel mit einer Werkzeugaufnahme 9 auf. Diese Werkzeugaufnahme dient zur Aufnahme der verschiedenen Werkzeuge, wie z. B. Bohrer, Fräser, Gewindeschneideinrichtung usw.

An einem insgesamt mit 10 bezeichneten Portal, das sich in Längsrichtung des Maschinenbettes 1 erstreckt und oberhalb der Endenbearbeitungsmaschine vorgesehen ist, ist eine insgesamt mit 11 bezeichnete Werkzeugwechseleinrichtung vorgesehen, die aus einem hinter dem Spindelkasten angeordneten Magazin 12 Werkzeuge entnehmen und in die Werkzeugaufnahme 9 einsetzen kann. Für den Werkzeugwechsel weist die Werkzeugwechseleinrichtung 11 zwei Greifarme 13 auf, wobei der eine Arm zur Entnahme des nicht mehr benötigten Werkzeuges aus der Spindel und der andere Arm, der vorher aus dem Werkzeugmagazin 12 ein entsprechendes Werkzeug entnommen hat, zum Einsatz des neuen Werkzeuges in die Spindel dient.

Ein Werkstück 14 wird mittels eines nicht dargestellten Ladeportals abgesenkt, wobei vorher die beiden Spannstockträger 3 so weit auseinandergefahren worden sind, daß das Werkstück zwischen ihnen abgesenkt werden kann. Das Werkstück kann auf einer sogenannten Vorablage, die aus zwei auf dem Maschinenbett verschiebbaren Auflageböcken 15 besteht, abgelegt werden. Hierauf werden dann die Spannstockträger 3 mit geöffneten Spannfuttern 5 gegeneinander verfahren bis das Werkstück mit seinen beiden Enden über die Spannfutter 5 hervorsteht. Nach Festspannen des Werkstückes durch die entsprechenden Spannfutter können dann die Auflageböcke 15 entfernt werden.

Eine besonders günstige Ausgestaltung für einen solchen Beladevorgang ist dann gegeben, wenn die Spannfutter zumindest einen Spannbakken mit größerem Verschiebeweg aufweisen, der ein Anheben des Werkstückes von den Auflageböcken 15 ermöglicht, so daß die Auflageböcke nicht entfernt zu werden brauchen. Selbstverständlich muß dabei das Spannfutter in eine solche Lage gedreht werden, daß dieser verschiebbare Backen das Werkstück von unten anheben kann. Es ist aber auch möglich, das Werkstück mittels eines Portalladers in der Spannfutterachse zu halten, bis die Spannfutter das Werkstück erfaßt haben.

Das gespannte Werkstück kann dann in jede beliebige Drehposition durch das antreibbare Spannfutter gebracht und mit Hilfe eines selbsthemmenden Antriebes in der jeweiligen Stellung gehalten werden. Hierdurch können in Verbindung mit der Querverschiebbarkeit der Spindelstöcke bzw. Spindelkästen 7 alle stirnseitig am Werkstück vorkommenden Arbeiten, wie Bohren, Senken, Reiben, Gewindeeinbringen und Fräsen durchgeführt werden, wobei auch ein Zirkularfräsen aufgrund des kontinuierlichen Drehantriebes des Spannfutters möglich ist.

## Ansprüche

1. Endenbearbeitungsmaschine mit zwei Spindelstöcken, die in horizontaler Richtung quer zur Maschinenbettlängsachse verschiebbar und mit jeweils einer Werkzeugaufnahme versehen sind sowie mit zwei längs des Maschinenbettes verfahrbaren Spannstockträgern mit jeweils einer Spanneinrichtung, **dadurch gekennzeichnet,** daß die Spanneinrichtung eines jeden Spannstockträgers (3) als ein um die Werkstückachse drehbares Spannfutter (5) ausgebildet und zumindest ein Spannfutter in Drehrichtung durch einen Antrieb verdrehbar und positionierbar ist.

2. Endenbearbeitungsmaschine nach Anspruch 1, **dadurch gekennzeichnet,** daß der Antrieb für das antreibbare Spannfutter (5) stufenlos regelbar ist.

3. Endenbearbeitungsmaschine nach Anspruch 1 oder 2, **dadurch gekennzeichnet,** daß der Antrieb für das antreibbare Spannfutter (5) arretierbar ist.

4. Endenbearbeitungsmaschine nach einem der Ansprüche 1 bis 3, **dadurch gekennzeichnet,** daß der Antrieb für das antreibbare Spannfutter (5) als selbsthemmender Schneckenantrieb ausgebildet ist.

Fig. 1

Fig. 2